# EUROPÄISCHE PATENTANMELDUNG

(11) **EP 3 190 675 A1**
(43) Veröffentlichungstag der Anmeldung: **12.07.2017**
(21) Anmeldenummer: 16197952.1
(22) Anmeldetag: 09.11.2016
(51) Int. Cl.: H02J 1/10, B60R 16/03

(54) **VERFAHREN ZUM KOPPELN EINES VERBRAUCHERS**

(30) Priorität: 07.01.2016 DE 102016200091
(71) Anmelder: ROBERT BOSCH GMBH, 70442 Stuttgart (DE)
(72) Erfinder: Koller, Oliver Dieter, 71384 Weinstadt (DE); Bohne, Christian, 70437 Stuttgart (DE)

(57) **Zusammenfassung**

Die Erfindung betrifft ein Verfahren zum Koppeln eines Verbrauchers (216) in einem Bordnetz (200), das einen ersten Bordnetzkanal (202), in dem mindestens ein Öffner vorgesehen ist, und einen zweiten Bordnetzkanal (204), in dem mindestens ein Schließer vorgesehen ist, aufweist, wobei der mindestens eine Schließer und der mindestens eine Öffner ein Koppelelement (220) bilden, über das der Verbraucher (216) an einen der beiden Bordnetzkanäle (202, 204) gekoppelt wird, wobei das Koppelelement (220) mit mindestens einem gemeinsamen Ansteuersignal (212) angesteuert wird, so dass eine Kopplung des Verbrauchers (216) an einen der beiden Bordnetzkanäle (202, 204) bewirkt wird.

## Beschreibung

Die Erfindung betrifft ein Verfahren zum Koppeln eines Verbrauchers in einem mehrkanaligen Bordnetz und ein solches Koppelelement.

### Stand der Technik

Unter einem Bordnetz ist insbesondere im automotiven Einsatz die Gesamtheit aller elektrischen Komponenten in einem Kraftfahrzeug zu verstehen. Somit sind davon sowohl elektrische Verbraucher als auch Versorgungsquellen, wie bspw. Generatoren oder elektrische Speicher, z. B. Batterien, umfasst. Im Kraftfahrzeug ist darauf zu achten, dass elektrische Energie so verfügbar ist, dass das Kraftfahrzeug jederzeit gestartet werden kann und während des Betriebs eine ausreichende Stromversorgung sichergestellt ist. Aber auch im abgestellten Zustand sollen elektrische Verbraucher noch für einen angemessenen Zeitraum betreibbar sein, ohne dass ein nachfolgender Start beeinträchtigt wird.

Zu beachten ist, dass aufgrund der zunehmenden Elektrifizierung von Aggregaten sowie der Einführung von neuen Fahrfunktionen die Anforderung an die Zuverlässigkeit der elektrischen Energieversorgung im Kraftfahrzeug stetig steigt. Weiterhin ist zu berücksichtigen, dass zukünftig bei einem hochautomatischen Fahren fahrfremde Tätigkeiten in begrenztem Maße zulässig sein sollen. Eine sensorische, regelungstechnische, mechanische und energetische Rückfallebene durch den Fahrer ist in diesem Fall nur noch eingeschränkt vorhanden. Daher besitzt bei einem hochautomatischen bzw. vollautomatisierten oder autonomen Fahren die elektrische Versorgung eine bisher in Kraftfahrzeugen nicht gekannte Sicherheitsrelevanz. Fehler im elektrischen Bordnetz müssen daher zuverlässig und möglichst vollständig erkannt werden.

Unter einem hochautomatischen Fahren, das auch als hochautomatisiertes Fahren bezeichnet wird, ist ein Zwischenschritt zwischen einem assistierten Fahren, bei dem der Fahrer durch Assistenzsysteme unterstützt wird, und einem autonomen Fahren, bei dem das Fahrzeug selbsttätig und ohne Einwirkung des Fahrers fährt, zu verstehen. Beim hochautomatischen Fahren verfügt das Fahrzeug über eine eigene Intelligenz, die vorausplant und die Fahraufgabe zumindest in den meisten Fahrsituationen übernehmen könnte. Daher hat bei einem hochautomatischen Fahren die elektrische Versorgung eine hohe Sicherheitsrelevanz.

Die Druckschrift DE 10 2009 053 691 A1 beschreibt ein Bordnetz sowie ein Verfahren und eine Vorrichtung zum Betreiben des Bordnetzes. Das Bordnetz umfasst einen Gleichspannungswandler und einen Basisenergiespeicher, der mit dem Gleichspannungswandler gekoppelt ist. Das Bordnetz umfasst weiterhin eine erste Auswahl von zumindest einem ersten elektrischen Verbraucher, der elektrisch parallel mit dem Gleichspannungswandler koppelbar ist, und eine zweite Auswahl von zumindest einem elektrischen Verbraucher, der elektrisch parallel mit dem Basisenergiespeicher koppelbar ist.

In mehrkanaligen Bordnetzen stellt sich u. a. die Aufgabe, Verbraucher, insbesondere sicherheitsrelevante Verbraucher, sicher versorgen zu können. Die bekannten Lösungen nach dem Stand der Technik haben den Nachteil, dass bei einem Einfachfehler beide Bordnetze gekoppelt werden können.

### Offenbarung der Erfindung

Vor diesem Hintergrund werden ein Verfahren gemäß Anspruch 1 und ein Koppelelement nach Anspruch 6 vorgestellt. Ausführungsformen ergeben sich aus den abhängigen Ansprüchen und aus der Beschreibung.

Das vorgestellte Verfahren und das beschriebene Koppelelement verwenden somit einen "Öffner" und einen "Schließer", die so miteinander kombiniert werden, dass die Vorteile von Dioden und Back-to-Back-Lösung kombiniert und die Nachteile eliminiert werden. Der Öffner unterbricht den Kontakt und damit den Stromfluss wenn er angesteuert wird. Der Schließer schließt den Kontakt, wenn er angesteuert wird. Somit ist sichergestellt, dass der Verbraucher immer an eines der Bordnetzkanäle gekoppelt ist und damit aus diesem versorgt wird.

Zu beachten ist, dass aufgrund ihrer Vorteile, z. B. bei der Schaltzeit, elektromechanische Relais heutzutage in vielen Anwendungen von Leistungshalbleitern ersetzt werden. Die Funktionalitäten eines elektromechanischen Schließers und Öffners können bspw. durch geeignete Kombination von selbstsperrenden und selbstleitenden MOSFETs, p- und n-Kanal-MOSFETs sowie durch zweistufige Bipolartransistoren substituiert werden. Dies stellt ebenfalls Ausführungsformen des vorgestellten Verfahrens und des vorgestellten Bordnetzes dar. Weiterhin kann eine gemeinsame Ansteuerleitung mit invertierter Auswirkung auf die bspw. zwei bzw. vier Schalter ein Merkmal sein.

Das beschriebene Verfahren und das dargelegte Koppelelement haben den Vorteil, dass der Verbraucher, der versorgt werden muss, auch bei Ausfall der Steuerung des Koppelelements weiterhin versorgt wird. Die Vorteile der Dioden werden also übernommen. Gleichzeitig können Kurzschlüsse im Verbraucher aktiv getrennt werden. Außerdem wird verhindert, dass beide Bordnetzkanäle im Fehlerfall miteinander verkoppelt werden.

Das vorgestellte Koppelelement kann bspw. auch Bestandteil von Komponenten, wie bspw. von einem Gleichspannungswandler, sein.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt ein zweikanaliges Bordnetz nach dem Stand der Technik.
Figur 2 zeigt eine Schaltungsanordnung zum Versorgen eines Verbrauchers nach dem Stand der Technik.
Figur 3 zeigt eine Ausführung des vorgestellten Koppelelementes.
Figur 4 zeigt eine weitere Ausführung des vorgestellten Koppelelementes.
Figur 5 zeigt noch eine weitere Ausführung des vorgestellten Koppelelementes.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

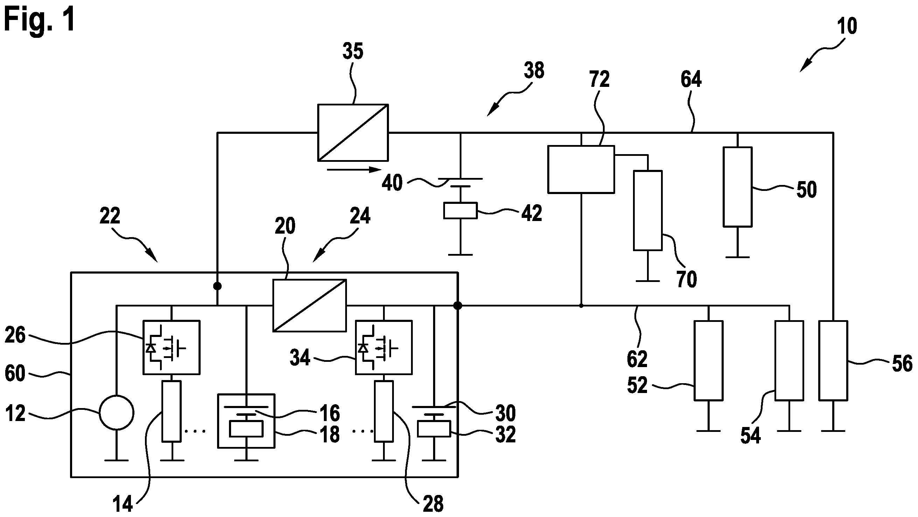

Figur 1 zeigt eine mögliche Ausführungsform eines zweikanaligen Bordnetzes nach dem Stand der Technik, das insgesamt mit der Bezugsziffer 10 bezeichnet ist. Dieses umfasst eine elektrische Maschine 12, bspw. einen Starter, einen ersten nicht sicherheitsrelevanten Verbraucher 14, eine erste Batterie 16, der ein Batteriemanagementsystem 18 zugeordnet ist, einen Gleichspannungswandler 20, der als Koppelelement zwischen einer Hochvoltseite 22, bspw. mit einem Spannungsniveau von 48 V, und einer Niedervoltseite 24, bspw. mit einem Spannungsniveau von 14 V, dient, eine erste electronic Power Distribution Unit 26 (ePDU: elektronische Energieversorgungseinheit), einen zweiten nicht sicherheitsrelevanten Verbraucher 28, eine zweite Batterie 30 mit zugeordnetem elektronischen Batteriesensor 32, eine zweite ePDU 34, einen zweiten Gleichspannungswandler 35, der als Koppelelement zwischen der Hochvoltseite 22 und einer weiteren Niedervoltseite 38, bspw. ebenfalls mit einem Spannungsniveau von 14 V, dient, eine dritte Batterie 40 mit zugeordnetem elektronischen Batteriesensor 42, einen ersten sicherheitsrelevanten Verbraucher 50, einen zweiten sicherheitsrelevanten Verbraucher 52, einen dritten sicherheitsrelevanten Verbraucher 54 und einen vierten sicherheitsrelevanten Verbraucher 56. Der dritte sicherheitsrelevante Verbraucher 54 und der vierte sicherheitsrelevante Verbraucher 56 sind zueinander redundant.

Mit einer Umrandung gekennzeichnet ist das Basisbordnetz 60 mit HV-Komponenten und 14 V-Komponenten ohne Sicherheitsrelevanz. In diesem Basisbordnetz 60 sind die erste Batterie 16 und die zweite Batterie 30 enthalten, einmal mit Hochvolt (HV), nämlich die erste Batterie 16, sowie mit Niedervolt (NV), nämlich die zweite Batterie 30.

An das Basisbordnetz 60 angekoppelt ist ein sicherheitsrelevanter Bordnetzkanal 62 mit den sicherheitsrelevanten Verbrauchern 52, 54, 56, wie bspw. Bremse, Lenkung usw. Es ist weiterhin ein zweiter sicherheitsrelevanter Kanal 64 vorgesehen. Da auch dieser die sicherheitsrelevanten Verbraucher 50 und 56 mit 14V versorgt, sind der zweite Gleichspannungswandler 35 und die zweite Batterie 40 vorgesehen.

Ein weiterer sicherheitsrelevanter Verbraucher 70 ist nur einmal vorhanden, kann aber über ein Koppelelement 72 wechselseitig aus einem der beiden Bordnetzkanäle 62 bzw. 64 redundant versorgt werden.

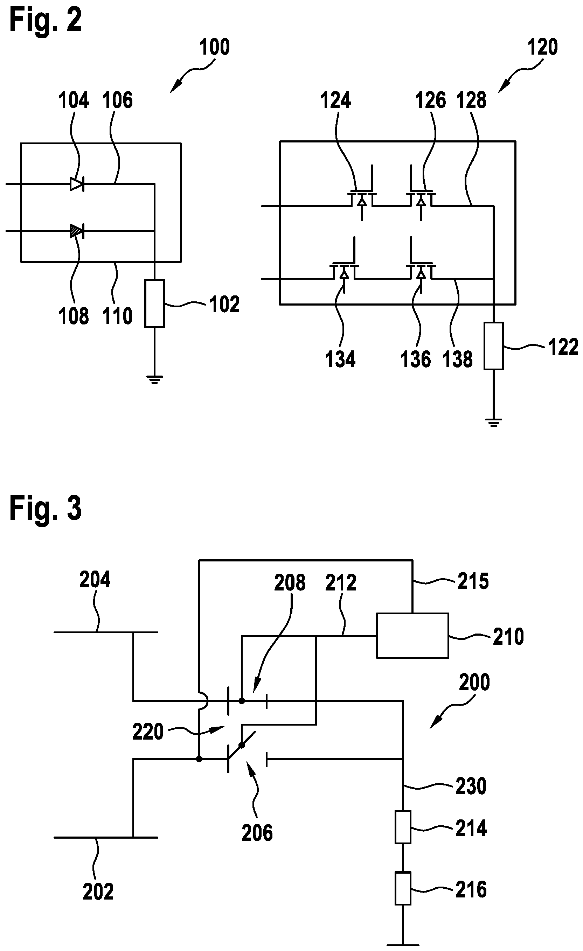

Nach dem Stand der Technik sind für dieses Koppelelement, das einen Umschalter realisiert, verschiedene Lösungen bekannt. Figur 2 gibt zwei bekannte Lösungen wieder.

Figur 2 zeigt auf der linken Seite eine erste Schaltungsanordnung 100, die ein Koppelelement verwirklicht und einen Verbraucher 102 ansteuert. Die Schaltungsanordnung 100 umfasst eine erste Diode 104 in einem ersten Bordnetzkanal 106 und eine zweite Diode 108 in einem zweiten Bordnetzkanal 110.

Auf der rechten Seite ist eine zweite Schaltungsanordnung 120 dargestellt, die ein Koppelelement verwirklicht und einen Verbraucher 122 ansteuert. Die Schaltungsanordnung 120 umfasst einen ersten Schalter 124 und einen zweiten Schalter 126, die in einem ersten Bordnetzkanal 128 angeordnet sind, sowie einen dritten Schalter 134 und einen vierten Schalter 136, die in einem zweiten Bordnetzkanal 138 angeordnet sind. Die Schalter 124, 126, 134, 136 können als MOSFETs ausgebildet sein.

In der ersten Schaltungsanordnung 100 ist das Koppelelement zu dem Verbraucher 102 somit über die Dioden 104, 108 ausgeführt. Je nachdem, welche Spannung höher ist, wird der Verbraucher 102 aus dem ersten Bordnetzkanal 106 oder dem zweiten Bordnetzkanal 110 versorgt. Dies hat den Nachteil, dass bei Überspannung in einem der Bordnetzkanäle 106 bzw. 110 der Verbraucher 102 nicht mehr betrieben werden kann. Dabei ist die Abschaltschwelle für Überspannung zu berücksichtigen. Die Dioden 104, 108 haben andererseits den Vorteil, dass keine aktive Ansteuerung benötigt wird. Weiterhin wird im Fall von Unterspannung in einem der Bordnetzkanäle 106 bzw. 110 der Verbraucher 102 unterbrechungsfrei aus dem anderen Bordnetzkanal 106 bzw. 110 versorgt.

Bei der zweiten Schaltungsanordnung 120 sind in jedem Bordnetzkanal 128, 138 sind zwei Schalter, bspw. Leistungshalbleiter, gegenläufig angeordnet. Dies wird als Back-to-Back-Verschaltung bezeichnet. Je nachdem, über welchen Bordnetzkanals 128 bzw. 138 der Verbraucher 122 versorgt werden soll, werden entweder der erste 124 und zweite Schalter126 bzw. der dritte 134 und vierte Schalter 136 angesteuert und so geschlossen.

Diese Lösung hat eine Reihe von Nachteilen:
1) Bei Ausfall der Ansteuerlogik des Koppelelements wird der Verbraucher 122 von beiden Bordnetzen 128 und 138 getrennt, da die Leistungshalbleiter unbestromt öffnen.
2) Durch Fehlansteuerungen können der erste Bordnetzkanal 128 und der zweite Bordnetzkanal 138 fälschlich verbunden werden.

Die bekannten Lösungen haben den Nachteil, dass bei einem Einfachfehler beide Bordnetze gekoppelt werden können. Ist bspw. eine der Dioden 104 in der ersten Schaltungsanordnung 100 durchlegiert, d. h. ständig leitend, kann dies nicht erkannt werden. Bei einer Überspannung in einem anderen Kanal mit der Diode 108 würde diese auf den ersten Kanal übersprechen, da die Diode 104 unerkannt leitend ist. Weiterhin kann bei einem Kurzschluss nach Masse im Verbraucher 102 dieser nicht vom ersten Kanal oder vom zweiten Kanal getrennt werden. Dadurch werden in jedem Fall beiden Kanäle durch den Kurzschluss beeinträchtigt.

Die zweite Schaltungsanordnung 120 hat den Nachteil, dass die Steuerung des Koppelelements, das durch die Schaltungsanordnung 120 gegeben ist, aktiv zwei Schalter schließen muss, um den Verbraucher 122 zu versorgen. Bei Ausfall der Steuerung kann der Verbraucher 122 nicht mehr versorgt werden. Gleichzeitig muss im Fall des Ausfalls eines Kanals sichergestellt werden, dass schnell genug auf den anderen, noch funktionierenden Kanal umgeschaltet wird, um den Verbraucher R2 unterbrechungsfrei zu versorgen. Die Ausführungsform hat weiterhin den Nachteil, dass durch Fehlansteuerungen der Schalter die beiden Kanäle miteinander verkoppelt werden können. Dies sollte aber in jedem Fall verhindert werden.

Es wird nunmehr vorgeschlagen, in einem Koppelelement einen Öffner und einen Schließer so miteinander zu kombinieren, dass die Vorteile von Dioden und Back-to-Back-Lösung kombiniert und die Nachteile eliminiert werden. Ein Öffner unterbricht den Stromfluss wenn er angesteuert wird. Der Schließer schließt den Kontakt wenn er angesteuert wird.

Figur 3 zeigt eine Ausführungsform des Bordnetzes, das insgesamt mit der Bezugsziffer 200 bezeichnet ist. Die Darstellung zeigt einen ersten Bornetzkanal 202, einen zweiten Bordnetzkanal 204, einen Schalter S1 206, einen Schalter S2 208, eine Ansteuerung 210, die ein Ansteuersignal O₁ 212 ausgibt, eine Sicherung 214 und einen Verbraucher 216, der zu versorgen ist und sicherheitsrelevant ist. Die Kombination aus Schalter S1 206 und Schalter S2 208 stellt ein Koppelelement 220 dar, dass über die Ansteuerung 210 angesteuert wird. Über das Koppelelement wiederum wird der Verbraucher 216 angesteuert, d. h. aus einem der beiden Bordnetzkanäle 202 bzw. 204 versorgt.

Die Ansteuerung sieht wie folgt aus:

| O₁ | S1 | S2 |
|---|---|---|
| 0 | offen | zu |
| 1 | zu | offen |

Der Schalter S1 206 besteht aus einem Öffner, der Schalter S2 208 aus einem Schließer. Wie vorstehend beschrieben wurde, können Öffner und Schließer in einer Ausführungsform mithilfe von Leistungshalbleiter realisiert werden, z.B. als selbstsperrende und selbstleitende MOSFETs. Beide werden durch das gleiche Ansteuerungssignal O₁ 212 geschaltet. Dadurch wird sichergestellt, dass immer nur ein Schalter 206 oder 208 geschlossen sein kann.

Ist das Signal O1= Null/False, so ist der Schalter S1 206 offen und der Schalter S2 208 geschlossen. Der Verbraucher 216 wird dann über den zweiten Bordnetzkanal 204 versorgt.

Ist das Signal O1=1/true, so wird der Verbraucher 216 aus dem ersten Bordnetzkanal 202 versorgt. Die beiden Schalter 206, 208, die bspw. als Leistungshalbleiter ausgebildet sind, können mit der Sicherung 214, die bspw. als Schmelzsicherung ausgebildet ist, kombiniert werden. Diese kann in einer Versorgungsleitung 230 zum Verbraucher 216 angebracht sein und sorgt dafür, dass im Fall eines Kurzschlusses in dem Verbraucher 216 dieser von beiden Bordnetzkanälen 202, 204 getrennt wird. Aus Gründen der Stromtragfähigkeit können alternativ in beiden Bordnetzkanälen 202, 204 mehrere Öffner bzw. Schließer, typischerweise Leistungshalbleiter desselben Typs, parallel geschaltet werden. Ein serielles Anordnen mehrerer Öffner und Schließer desselben Typs ist ebenfalls denkbar. Die Schalter S1 206 und S2 208 stehen somit repräsentativ für eine Gruppe an Öffner bzw. Schließer desselben Typs, die in beliebiger Zahl parallel oder seriell angeordnet werden können.

Die Ansteuerung 210 wird bei dieser Ausführung über eine Leitung 215 aus dem ersten Bordnetzkanal 202 versorgt. Bei Ausfall des ersten Bordnetzkanals 202 und damit Ausfall der Ansteuerung bleibt der Schalter S2 208 als Schließer geschlossen und damit die Versorgung aus dem zweiten Bordnetzkanal 204 gewährleistet.

Zu beachten ist auch, dass ein solches Koppelelement auch in einem Bordnetz mit mehr als zwei Kanälen angeordnet werden kann. In diesem Fall müssten Schließer und Öffner derart in den Bordnetzkanälen angeordnet sein, dass sichergestellt ist, dass immer ein Bordnetzkanal den Verbraucher versorgt.

Die dargestellte Ausführungsform hat den Vorteil, dass es keine Fehleransteuerung geben kann, die dazu führt dass der erste Kanal 202 und der zweite Kanal 204 miteinander verkoppelt werden können. Bei Über- oder Unterspannung in einem der Bordnetzkanäle 202 bzw. 204 kann auf den jeweils anderen umgeschaltet werden. Fällt die Ansteuerung 210 aus, so schließt automatisch der Schalter S2 208 und der Schalter S1 206 öffnet. Der Verbraucher 216 wird dann aus dem zweiten Bordnetzkanal 204 versorgt.

In einer weiteren Ausführungsform wird jeweils eine Sicherung, bspw. eine Schmelzsicherung, direkt nach dem Schalter S1 und S2 und vor dem Verbindungspunkt der beiden Bordnetzkanäle angebracht. Dies hat den Vorteil, dass beim Kurzschluss in eine der Leitungen nach S1 oder S2 der Verbraucher weiterhin durch den jeweils anderen Bordnetzkanal versorgt werden kann.

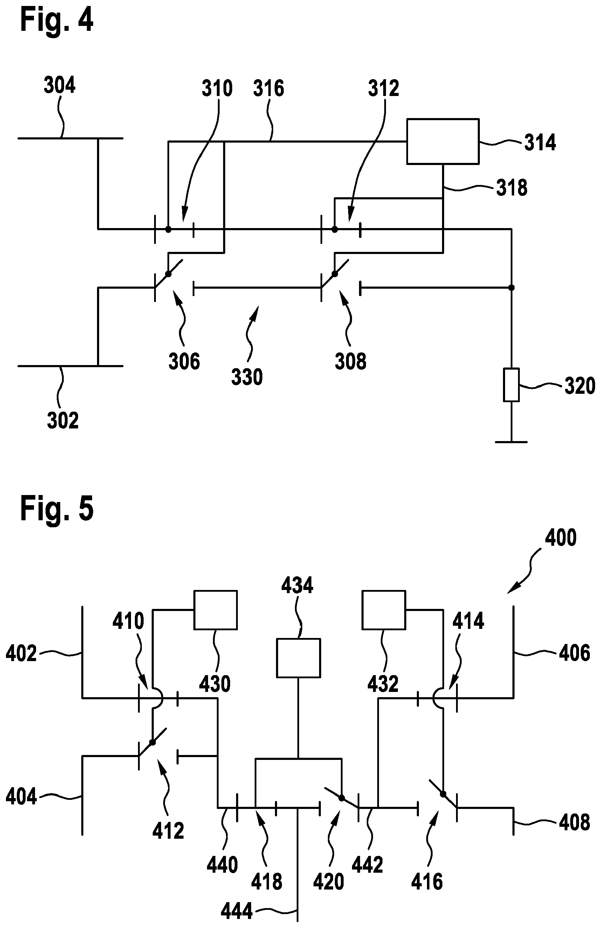

Figur 4 zeigt eine weitere Ausführungsform des Bordnetzes, das insgesamt mit der Bezugsziffer 300 bezeichnet ist. Die Darstellung zeigt einen ersten Bornetzkanal 302, einen zweiten Bordnetzkanal 304, einen Schalter S1 306, einen Schalter S3 308, einen Schalter S2 310, einen Schalter S4 312 eine Ansteuerung 314, die ein Ansteuersignal O₁ 316 und ein Ansteuersignal O₂ 318 ausgibt, und einen Verbraucher 320, der zu versorgen und sicherheitsrelevant ist. Die Kombination aus den Schaltern S1 306, S3 308, S2 310 und S4 312 stellt ein Koppelelement 330 dar, dass über die Ansteuerung 314 angesteuert wird.

Die Ansteuerung sieht wir folgt aus:

| O₁ | O₂ | S1 | S2 | S3 | S4 | Verbraucher |
|---|---|---|---|---|---|---|
| 0 | 0 | offen | zu | offen | zu | aus zweitem Kanal |
| 1 | 0 | zu | offen | offen | zu | getrennt |
| 0 | 1 | offen | zu | zu | offen | getrennt |
| 1 | 1 | zu | offen | zu | offen | aus erstem Kanal |

Es werden somit nach dem gleichen Schema, wie dies in Figur 3 gezeigt ist, jeweils zwei selbstleitende (S2+S4) und zwei selbstsperrende Schalter (S1 und S3) kombiniert. Für die Ansteuerung der Schalter stehen zwei getrennte Ansteuersignale O₁ 316 und O₂ 318 als Ausgangssignale der Ansteuerung 314 zur Verfügung. Sind beide Ansteuersignale 316, 318 gleich Null, so wird der Verbraucher 320 aus dem zweiten Bordnetzkanal 304 versorgt. Sind beide Ausgangsignale gleich 1, so wird der Verbraucher 320 aus dem ersten Bornetzkanal 302 versorgt.

Für den Fall eines Kurzschlusses in dem Verbraucher 320 oder den Leitungen zu dem Verbraucher 320, werden die Ausgangsignale O₁316 und O₂ 318 verschiedenen ausgegeben. Dadurch ist in jedem Bordnetzkanal 302, 304 ein Schalter geschlossen und der andere im gleichen Bordnetzkanal 302, 304 geöffnet. Der Verbraucher 320 kann dadurch von beiden Bordnetzkanälen 302, 304 getrennt werden.

Auch diese Ausführungsform hat den Vorteil, das auch bei fehlerhafter Ansteuerung niemals beide Bordnetzkanälen 302, 304 miteinander verkoppelt werden können. Auch bei Ausfall der Ansteuerung 314 wird der Verbraucher 320 automatisch durch die selbstleitenden Schalter aus dem zweiten Bordnetzkanal 304 versorgt. Ggf. ist es sinnvoll, die Schalter gegenläufig, d. h. back-to-back anzuordnen, um eine Leitung durch eine parasitäre Diode auszuschließen.

In einer weiteren Ausführungsform sind die Schließer im ersten Bornetzkanal angeordnet und die Öffner im zweiten Bordnetzkanal. Dadurch wird bei Ausfall der Ansteuerung der Verbraucher automatisch aus dem ersten Bordnetzkanal versorgt. Auch hier gilt, wie bei der Ausführungsform der Figur 3, dass Öffner und Schließer in einer Ausführungsform mithilfe von Leistungshalbleiter realisiert werden, bspw. durch selbstsperrende und selbstleitende MOSFETs.

Ein serielles Anordnen mehrerer Öffner und Schließer desselben Typs ist auch bei dem Bordnetz 300 der Figur 4 denkbar. Die Schalter S1, S2, S3 und S4 stehen somit repräsentativ für eine Gruppe an Öffner bzw. Schließer desselben Typs, die in beliebiger Zahl parallel oder seriell angeordnet werden können.

Die Anzahl n der Öffner in einem Bordnetzkanal entspricht der Anzahl n der Schließer in dem anderen Bordnetzkanal. In diesem Fall sind auch n Ansteuersignale bereitgestellt, von denen jedes jeweils einen Öffner und einen Schließer gemeinsam ansteuert.

Allen Ausführungsformen ist gemein, dass die jeweils symmetrisch gespiegelte Variante des Umschalters, d. h. alle Schließer und Öffner aus dem ersten Bordnetzkanal werden in den zweiten Bordnetzkanal verschoben und umgekehrt, ebenfalls eine mögliche Ausführung ist.

Die Schalter S1 bis S4 können durch geeignete Leistungshalbleiter realisiert werden. Dies können bspw. p-Kanal oder n-Kanal MOSFETs sein. Von Bedeutung sind die gegenläufige Verwendung von Öffnern und Schließern und eine gemeinsame Ansteuerleitung, die zu invertiertem Verhalten führt.

In einer weiteren Ausführungsform wird das Koppelelement dazu benutzt, um bspw. einen Spannungswander sowohl aus der Ausgangsseite als auch aus der Eingangseite zu versorgen. Dies hat den Vorteil, dass der Wandler auch bei Ausfall, bspw. bei Unter- oder Überspannung, in einem der Bordnetzkanäle weiterhin aktiv bleiben kann.

Figur 5 zeigt eine Ausführung eines Bordnetzes 400, in dem ein Koppelelement vorgesehen ist, mit einem ersten Kanal 402, einem zweiten Kanal 404, einem dritten Kanal 406 und einem vierten Kanal 408. In dem ersten Kanal 402 ist ein Schließer 410, in dem zweiten Kanal 404 ein Öffner 412, in dem dritten Kanal 406 ein Schließer 414 und in dem vierten Kanal 408 ein Öffner 416 angeordnet. In einem Kanal 440, der den ersten Kanal 402 und den zweiten Kanal 404 kombiniert, ist ein Schließer 418 und in einem Kanal 442, der den dritten Kanal 406 und den vierten Kanal 408 kombiniert, ist ein Öffner 420 angeordnet.

Ein erstes Ansteuersignal 430 steuert gemeinsam den Schließer 410 und den Öffner 412 an, ein zweites Ansteuersignal 432 steuert gemeinsam den Schließer 414 und den Öffner 416 an, ein drittes Ansteuersignal 434 steuert gemeinsam den Schließer 418 und den Öffner 420 an. So ist sichergestellt, dass ein Verbraucher (nicht dargestellt) über einen Ausgang 444 des Koppelelements immer versorgt ist.

## Patentansprüche

1. Verfahren zum Koppeln eines Verbrauchers (216, 320) in einem Bordnetz (200, 300, 400), das einen ersten Bordnetzkanal (202, 302), in dem mindestens ein Öffner (412, 416, 420) vorgesehen ist, und einen zweiten Bordnetzkanal (204, 304), in dem mindestens ein Schließer (410, 414, 418) vorgesehen ist, aufweist, wobei der mindestens eine Schließer (410, 414, 418) und der mindestens eine Öffner (412, 416, 420) ein Koppelelement (220, 330) bilden, über das der Verbraucher (216, 320) an einen der beiden Bordnetzkanäle (202, 302, 204, 304) gekoppelt wird, wobei das Koppelelement (220, 330) mit mindestens einem gemeinsamen Ansteuersignal (212, 316, 318) angesteuert wird, so dass eine Kopplung des Verbrauchers (216, 320) an einen der beiden Bordnetzkanäle (202, 302, 204, 304) bewirkt wird.

2. Verfahren nach Anspruch 1, bei dem in dem ersten Bordnetzkanal (202, 302) genau ein Öffner (412, 416, 420) und in dem zweiten Bordnetzkanal (204, 304) genau ein Schließer (410, 414, 418) vorgesehen ist, die das Koppelelement (220, 330) bilden, wobei der Öffner (412, 416, 420) und der Schließer (410, 414, 418) mit genau einem Ansteuersignal (212, 316, 318) gemeinsam angesteuert werden.

3. Verfahren nach Anspruch 1, bei dem in dem ersten Bordnetzkanal (202, 302) n Öffner (412, 416, 420) und in dem zweiten Bordnetzkanal (204, 304) n Schließer (410, 414, 418) vorgesehen sind, die das Koppelelement (220, 330) bilden, wobei das Koppelement (220, 330) mit n Ansteuersignalen (212, 316, 318) angesteuert wird, wobei jedes der n Ansteuersignale (212, 316, 318) jeweils einen Öffner (412, 416, 420) und einen Schließer (410, 414, 418) gemeinsam ansteuert.

4. Verfahren nach Anspruch 3, wobei die n Öffner (412, 416, 420) und die n Schließer (410, 414, 418) zumindest teilweise seriell zueinander angeordnet sind.

5. Verfahren nach Anspruch 3 oder 4, wobei die n Öffner (412, 416, 420) und die n Schließer (410, 414, 418) zumindest teilweise parallel zueinander angeordnet sind.

6. Koppelelement, das insbesondere zur Durchführung eines Verfahrens nach einem der Ansprüche 1 bis 5 eingerichtet ist, mit mindestens einem Öffner (412, 416, 420), der einem ersten Bordnetzkanal (202, 302) zuzuordnen ist, und mindestens einem Schließer (410, 414, 418), der einem zweiten Bordnetzkanal (204, 304) zuzuordnen ist, wobei das Koppelelement (220, 330) dazu eingerichtet ist, bewirkt durch mindestens ein gemeinsames Ansteuersignal (212, 316, 318), einen Verbraucher (216, 320) an einen der beiden Bordnetzkanäle (202, 302, 204, 304) zu koppeln.

7. Koppelelement nach Anspruch 6, mit einer Ansteuerung (210, 314), die das mindestens eine Ansteuersignal (212, 316, 318) ausgibt.

8. Koppelelement nach Anspruch 6 oder 7, das mehrere seriell zueinander angeordnete Öffner (412, 416, 420) und mehrere seriell zueinander angeordnete Schließer (410, 414, 418) aufweist.

9. Koppelelement nach einem der Ansprüche 6 bis 8, das mehrere parallel zueinander angeordnete Öffner (412, 416, 420) und mehrere parallel zueinander angeordnete Schließer (410, 414, 418) aufweist.

10. Koppelelement nach einem der Ansprüche 6 bis 9, bei dem der mindestens eine Öffner (412, 416, 420) und der mindestens eine Schließer (410, 414, 418) als Leistungshalbleiter ausgebildet sind.
